# EUROPEAN PATENT APPLICATION

(11) **EP 4 703 113 A1**
(43) Date of publication of application: **04.03.2026**
(21) Application number: 25185561.5
(22) Date of filing: 26.06.2025
(51) Int. Cl.: B29C 33/38, B29C 33/42, B29C 33/56, B29C 45/37

(54) **A MOULD ARRANGED FOR MANUFACTURING AN OBJECT, A METHOD OF MANUFACTURING THE MOULD**

(30) Priority: 02.09.2024 NL 2038551
(71) Applicant: IGS B.V., 5633 AJ Eindhoven (NL)
(72) Inventor: PLAßMANN, Stephan, EINDHOVEN (NL)
(74) Representative: Algemeen Octrooi- en Merkenbureau B.V.

(57) **Abstract**

A method of manufacturing a mould and a mould arranged for manufacturing an object, preferably a mould for injection moulding an object comprising a plastic material, the mould comprising:
- a first mould section arranged for, during use, delimiting a part of a cavity for manufacturing the object;
- a surface structure provided at a side of the first mould section facing, during use, the cavity, wherein the surface structure comprises:
- a first section provided with first features;
- a second section provided with second features, wherein the first features are sharper than the second features; and
wherein the first section is provided at a side of the second section facing away, during use, from the cavity.

## Description

According to a first aspect, the present disclosure relates to a mould for manufacturing an object.

According to a second aspect, the present disclosure relates to a method of manufacturing a mould.

According to a third aspect, the present disclosure relates to a method of manufacturing an object using a mould according to the first aspect of the present disclosure or a mould obtainable by the method according to the second aspect of the present disclosure.

It is known that for producing objects using moulding tools, in particular injection moulding tools, especially with multi-cavity inserts, with a very short manufacturing cycle time a running-in time is required to reach a steady production cycle. This running-in time depends among other things on the number of cavities and the level of difficulty of the removal of the objects from the mould.

The objective of the present disclosure is to provide a mould that avoids, or at least significantly reduces the running-in time.

The objective is achieved by the mould according to the first aspect of the present disclosure, preferably a mould for injection moulding an object comprising a plastic material, the mould comprising:
- a first mould section arranged for, during use, delimiting a part of a cavity for manufacturing the object;
- a surface structure provided at a side of the first mould section facing, during use, the cavity, wherein the surface structure comprises:
   - a first section provided with first features;
   - a second section provided with second features, wherein the first features are sharper than the second features; and
wherein the first section is provided at a side of the second section facing away, during use, from the cavity.

The present disclosure relies at least partly on the insight that during the running-in time a layer of material used for manufacturing the object, such as a plastic material, is built-up at a surface of a wall delimiting the cavity for forming the object. Once a predetermined thickness of the material is formed at the surface of the wall a relatively steady production cycle may be realised.

The present disclosure is further based on the insight that the period of time required for the formation of the coating may be reduced by providing the surface of the wall of the mould delimiting the cavity with a surface structure.

The mould according to the first aspect of the present disclosure has the technical effect that the running-in time is strongly reduced or even that no running-in time is necessary anymore for the realisation of the relatively stead production cycle.

Another advantage is that demoulding of the moulded object is improved with the mould according to the first aspect of the present disclosure, because the first features support demoulding of the object.

Furthermore, due to the specific surface structure of the mould, improved geometrical conformity of the moulded object can be realised.

Substantial decrease in the formation of residue of the moulded object at the surface of the mould is possible due to the second features on the surface structure of the first mould section that support maintaining a relative clean mould surface and smoothness of the object. This reduces the necessary maintenance work.

No further certification of a coating may be necessary in a medical injection moulding processes is needed - the coating material, such as a plastic material, is identical to the material of the object to be manufactured that typically has an FDA approvement.

It is to be noted that the second features of the surface structure may be considered peaks that have rounded tops, like flattened, flat or worn tops.

Preferably, all features of the first section are sharper than all features of the second section.

In an embodiment, all the features of the second section have rounded or flat tops.

Within the present disclosure, the layer of material used for manufacturing the object, such as the plastic material, that is built-up at the surface of the wall delimiting the cavity for forming the object may also be referred to as a coating.

In an embodiment, a majority of the surface area of the surface structure formed by the first section is provided with the first features, preferably wherein the surface area of the surface structure formed by the first section is free from the second features.

In another embodiment, a majority of the surface area of the surface structure formed by the second section is provided with the second features, preferably wherein the surface area of the surface structure formed by the second section is free from the first features.

The mould may comprise a plurality of first sections forming a first layer and/or wherein the mould comprises a plurality of second sections forming a second layer.

In an embodiment, a combined dimension of the first features and the second features is associated with a dimension of the surface features of the object.

In another embodiment, the mould further comprises a second mould section arranged for, during use, delimiting a part of the cavity for manufacturing the object.

Preferably, the surface structure is also provided at a side of the second mould section facing, during use, the cavity.

In an embodiment, the surface structure is an integral part of the first mould section and/or the surface structure is an integral part of the second mould section, if present.

In a preferred embodiment, the surface structure is provided with a coating, preferably, wherein a predetermined amount of the surface area of the surface structure is provided with the coating.

In this regard it is beneficial if the coating comprises a material that is identical to the material to be employed with the mould for manufacturing the object. This is beneficial for avoiding, or at least significantly reducing, the running-in time of the mould for manufacturing the object.

EP 2495355 A1 discloses a mould provided with a porous alumina layer provided with a plurality of minute recessed portions.

US 2022/379534 A1 discloses a mould having a mould body provided with microscopic asperities and nanoscopic asperities. An electroless nickel coating is applied to the surface of the mould body that flattens the nanoscopic asperities, but essentially preserves the contour of the microscopic asperities.

Preferably, the coating covers at least 19 % of the side of the first mould section facing, during use, the cavity and at least 19 % of the side of the second mould section, if present, facing, during use, the cavity.

Preferably, the coating has a thickness in the range of 0.01 - 1.5 micrometre, preferably in the range of 0.01 - 1.0 micrometre.

Preferably, a molecule of the coating material comprises at most two oxygen atoms.

Preferably, the coating material has a relative low surface energy and/or a relative low polarity.

Preferably, the coating material is non-polar.

Preferably, the coating material comprises one of ABS, COC, PP, PE and COP.

Preferably, the coating comprises a polyolefin, preferably consists of a polyolefin, which is a plastic material. The coating may consist of the material used for manufacturing the object.

Preferably, the first section and the second section are divided by a virtual dividing plane.

In this regard it is beneficial if the first features extend over a larger distance from the dividing plane seen in a direction perpendicular to the dividing plane than the second features. In other words, a thickness of the section with the second features is smaller than a thickness of the section with the first features.

The method according to the second aspect of the present disclosure comprises the steps of:
- providing a mould for manufacturing an object, preferably a mould for injection moulding an object comprising a plastic material;
- determining physical and chemical properties of a material, preferably a plastic material, to be employed with the mould;
- determining a geometry of a first mould section and a second mould section, if present, of the mould, the first mould section and the second mould section, if present, being arranged for, during use, delimiting a part of a cavity for manufacturing of the object;
- determining properties of a surface structure of the mould taking into account the physical and chemical properties of the material, the geometry of the first mould section and the second mould section, if present, the surface structure being provided at a side of the first mould section facing, during use, the cavity and at a side of the second mould section, if present, facing, during use, the cavity;
- treating a surface of the mould to obtain the mould comprising the surface structure having a first section provided with first features and a second section provided with second features, wherein the first features are sharper than the second features, and wherein the first section is provided at a side of the second section facing away, during use, from the cavity.

The skilled person will understand that the order of execution of the steps of the method according to the second aspect of the present disclosure may be different as compared to the order as presented in the claims. Hence, the method steps may be executed in different manners. For example, the step of determining the properties of the surface structure of the mould may be done before the step of determining the geometry of the first mould section of the mould.

Preferably, during the step of determining physical and chemical properties, at least one of surface energy, melting point, viscosity, molecular chain length, chemical composition of the material to be deployed with the mould is determined.

Preferably, the step of treating is done by means of laser-texturing, blasting with abrasive and/or non-abrasive particles, electrical discharge machining, milling, grinding, etching, and/or polishing.

The method may further comprise the steps of:
- selecting a suitable solvent, such as ethanol, and/or temperature to dissolve a coating material, preferably comprising the same material as the material of the object to be manufactured with the mould such as the plastic material;
- dissolving the coating material in the solvent, to obtain a solution of coating material;
- depositing the solution of coating material onto the surface structure of the mould;
- evaporating the solvent by heating the solution of coating material deposited onto the surface structure of the mould at a temperature above the melting point of the coating material, optionally subsequently followed by melting of the coating material, such that the surface structure is provided with a coating, preferably, wherein a predetermined amount of the surface area of the surface structure is provided with the coating.

Preferably, the method further comprises the step of:
- cleaning the surface structure, preferably using ultrasound and/or isopropanol, wherein the step of cleaning is performed before performing the step of depositing.

Preferably, during the step of dissolving, the temperature of the solvent is in the range of 50 °C - 90 °C, preferably in the range of 60 °C - 80 °C.

Preferably, the solution of coating material obtained in the step of dissolving has a concentration of coating material in the solvent in the range of 1 % - 10 %, preferably in the range of 3 % - 5 %.

Preferably, the step of depositing is done by means of spraying, brushing, wiping or dipping.

In an embodiment of the method according to the second aspect of the present disclosure, the coating covers at least 19 % of the side of the first mould section facing, during use, the cavity and at least 19 % of the side of the second mould section, if present, facing, during use, the cavity.

In another embodiment of the method according to the second aspect of the present disclosure, the coating has a thickness in the range of 0.01 - 1.5 micrometre, preferably in the range of 0.01 - 1.0 micrometre.

In an embodiment of the method according to the second aspect, amolecule of the coating material comprises at most two oxygen atoms.

Preferably, the coating material has a relative low surface energy and/or a relative low polarity.

Preferably, the coating material is non-polar.

Preferably, the coating material comprises one of ABS, COC, PP, PE and COP.

In yet another embodiment of the method according to the second aspect of the present disclosure, the coating comprises a polyolefin, preferably consists of a polyolefin.

Preferably, the method according to the second aspect of the present disclosure is used for manufacturing a mould according to the first aspect of the present disclosure.

Embodiments of the mould according to the first aspect of the present disclosure as presented herein are also applicable to the method of manufacturing a mould according to the second aspect of the present disclosure, and vice versa.

Effects of the mould according to the first aspect of the present disclosure as presented herein correspond to or are similar to effects of the method of manufacturing a mould according to the second aspect of the present disclosure.
According to the third aspect of the present disclosure comprises a method of manufacturing an object using a mould according to the first aspect of the present disclosure or a mould obtainable by the method according to the second aspect of the present disclosure.

Embodiments of the mould according to the first aspect of the present disclosure and the method of manufacturing a mould according to the second aspect of the present disclosure as presented herein are also applicable to the method of manufacturing an object according to the third aspect of the present disclosure, and vice versa.

Effects of the mould according to the first aspect of the present disclosure and the method of manufacturing a mould according to the second aspect of the present disclosure as presented herein correspond to or are similar to effects of the method of manufacturing an object according to the third aspect of the present disclosure.

The present disclosure is hereinafter explained in more detail with reference to the accompanying drawings in which embodiments of the present disclosure are shown and in which like reference numbers indicate the same or similar elements. The present disclosure is by no means limited to the embodiments described therein.
Fig. 1 schematically shows a mould according to the first aspect of the present disclosure in an open position;
Fig. 2A schematically shows a mould according to the first aspect of the present disclosure in a closed position;
Fig. 2B schematically shows an object manufactured with the mould of Fig. 2;
Fig. 3A schematically shows a surface structure of a mould not according to the present disclosure;
Fig. 3B schematically shows an example of a surface structure of a mould according to the present disclosure;
Fig. 4 schematically shows another example of a surface structure of a mould according to the present disclosure;
Fig. 5 schematically shows a plurality of surface structures of the surface structure of Fig. 3B forming a first layer;
Fig. 6 schematically shows a method according to the second aspect of the present disclosure.

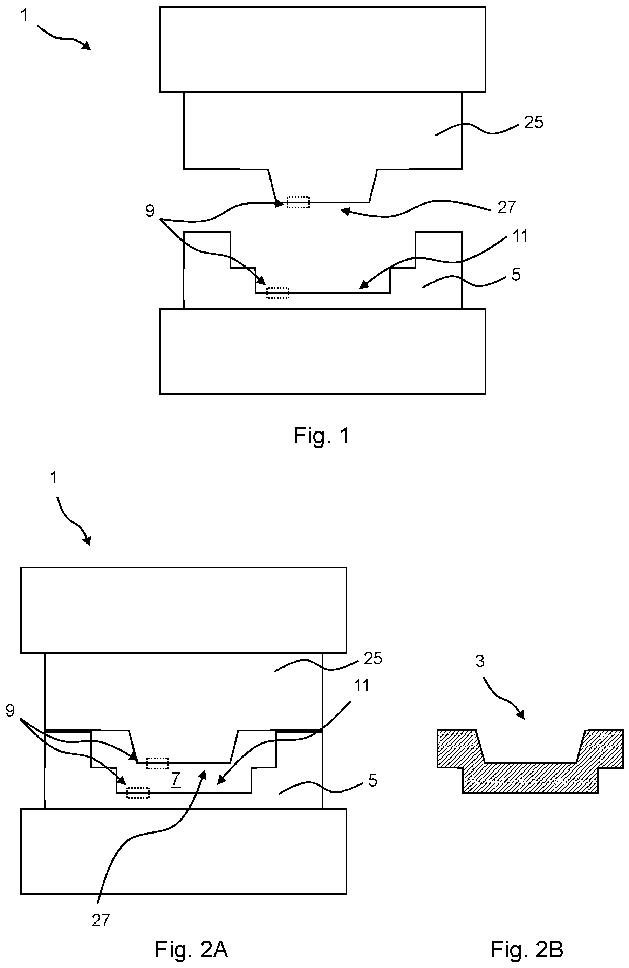

Figs. 1 and 2A show an example of a mould 1 according to the first aspect of the present disclosure. In Fig. 1, the mould 1 is in an open position and in Fig. 2A, the mould 1 is in a closed position. The mould 1 is arranged for manufacturing an object 3, such as a mould for injection moulding an object 3 comprising a plastic material.

As shown in Fig. 2A, the mould 1 comprises a first mould section 5 arranged for, during use, delimiting a part of a cavity 7 for manufacturing the object 3, as shown in Fig. 2B.

The mould 1 further comprises a surface structure 9 provided at a side 11 of the first mould section 5 facing, during use, the cavity 7.

Shown in Figs. 1 and 2A, the mould further comprises a second mould section 25 arranged for, during use, delimiting a part of the cavity 7 for manufacturing the object 3 and the surface structure 9 is also provided at a side 27 of the second mould section 25 facing, during use, the cavity.

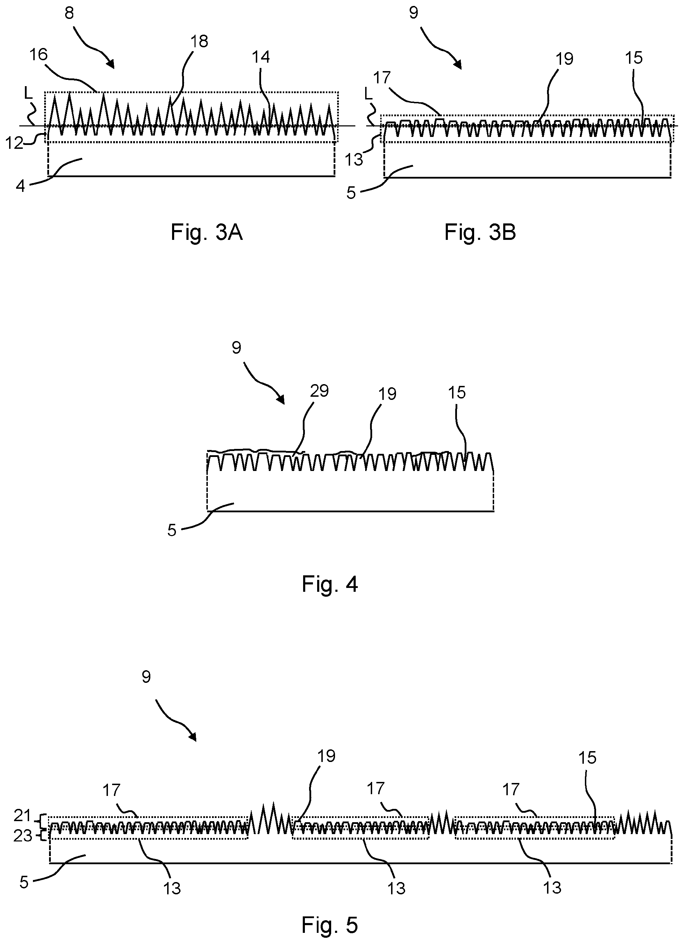

Fig. 3A shows a surface structure 8 - not according to the present disclosure - of a first mould section 4. It however, also represents a surface structure 8 of a second mould section 24. The surface structure 8 comprises a first section 12 provided with first features 14 and a second section 16 provided with second features 18, wherein the first section12 is provided at a side of the second section16 facing away, during use, from the cavity 6. In other words, the first section 12 lies in between the second section 16 and the first mould section 4. The first section 12 and the second section 16 are divided by a virtual dividing plane L.

Fig. 3B shows a surface structure 9 - according to the first aspect of the present disclosure - of a first mould section 5. The main difference between the surface structure 9 of Fig. 3B and the surface structure 8 of Fig. 3A is that that the first features 15 of surface structure 9 of Fig. 3B are sharper than the second features 19 of surface structure 9 of Fig. 3B. The second features 19 of surface structure 9 of Fig. 3B are considered peaks that have rounded tops, like flattened, flat or worn tops.

The dividing plane L, dividing the first features 15 from the second features 19 is also shown in Fig. 3B. The first features 15 extend over a larger distance from the dividing plane L seen in a direction perpendicular to the dividing plane L than the second features 19. In other words, a thickness of the section with the second features 19 is smaller than a thickness of the section with the first features 15.

Shown in Fig. 3B, the majority of the surface area of the surface structure 9 formed by the first section 13 is provided with the first features 15. As also becomes clear from Fig. 3B, the surface area of the surface structure 9 formed by the first section 13 is free from the second features 19.

Also shown in Fig. 3B is that a majority of the surface area of the surface structure 9 formed by the second section 17 is provided with the second features 19 and the surface area of the surface structure 9 formed by the second section 17 is free from the first features 15.

As becomes clear from Fig. 3B, the surface structure 9 is an integral part of the first mould section 5 and the surface structure 9 is an integral part of the second mould section 25, if present. In other words, the surface structure 9 is realised by treating a part of the second mould section 25.

The object 3 is formed, during use, in the cavity 7 of the mould 1. Logically, a dimension of the surface features of the object 3 is associated with a dimension of the surface of the mould 1. Consequently, a combined dimension of the first features 15 and the second features 19 is associated with the dimension of the surface features of the object 3 as shown in Fig. 3B.

Fig. 4 shows that the surface structure 9 is provided with a coating 29, having a thickness in the range of 0.1 - 1.5 micrometre, wherein a predetermined amount of the surface area of the surface structure 9 is provided with the coating 29. As becomes clear from Fig. 4, the coating 29 covers at least 25 % of the side of the first mould section 5 facing, during use, the cavity 7 and thus also, at least 25 % of the side of the second mould section 25 facing, during use, the cavity 7.

The coating 29 may consist of a polyolefin, which is a plastic material.

Shown in Fig. 5 is part of a mould 1 comprising a plurality of first sections 13 forming a first layer 21 and comprising a plurality of second sections 17 forming a second layer 23.

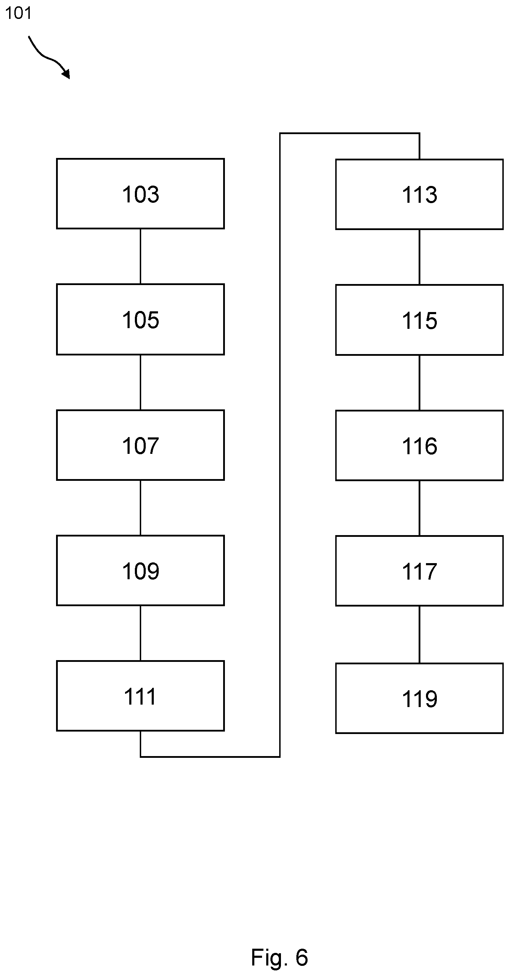

Fig. 6 shows a method 101 of manufacturing a mould 1 and comprises the steps of providing 103 a mould 1 for manufacturing an object 3, such as a mould 1 for injection moulding an object 3 comprising a plastic material; determining 105 physical and chemical properties of a plastic material, to be employed with the mould 1; determining 107 a geometry of a first mould section 5 and a second mould section 25 of the mould 1, the first mould section 5 and the second mould section 25 being arranged for, during use, delimiting a part of a cavity 7 for manufacturing of the object 3; determining 109 properties of a surface structure 9 of the mould 1 taking into account the physical and chemical properties of the material, the geometry of the first mould section and the second mould section, the surface structure 9 being provided at a side 11 of the first mould section 5 facing, during use, the cavity 7 and at a side 27 of the second mould section 25 facing, during use, the cavity 7; treating 111 a surface of the mould 1 to obtain the mould 1 comprising the surface structure 9 having a first section 13 provided with first features 15 and a second section 17 provided with second features 19, wherein the first features 15 are sharper than the second features 19, and wherein the first section 13 is provided at a side of the second section 17 facing away, during use, from the cavity 7.

The step of treating 111 is done by means of laser-texturing, but may also be done by means of blasting with abrasive and/or non-abrasive particles, etching, and/or polishing.
The method 101 further comprises the steps of selecting 113 a suitable solvent, and temperature to dissolve a coating material, comprising the same material as the material of the object 3 to be manufactured with the mould 1,; dissolving 115 the coating material in the solvent, to obtain a solution of coating material; cleaning 116 the surface structure; depositing 117 the solution of coating material onto the surface structure 9 of the mould 1; evaporating 119 the solvent by heating the solution of coating material deposited onto the surface structure of the mould at a temperature above the melting point of the coating material, subsequently followed by melting of the coating material, such that the surface structure 9 is provided with a coating 29, wherein a predetermined amount of the surface area of the surface structure 9 is provided with the coating 29..

The solution of coating material obtained in the step of dissolving 115 has a concentration of coating material in the solvent of 3-5 %.

The step of depositing 117 is done by means of spraying, but may also be done by means of brushing, wiping or dipping.

The coating 29, having a thickness in the rage of 0.1 - 1.5 micrometre, covers at least 19 % of the side of the first mould section 5 facing, during use, the cavity 7 and thus also, at least 19 % of the side of the second mould section 25 facing, during use, the cavity 7.

Other variations to the disclosed embodiments can be understood and effected by those skilled in the art in practicing the present disclosure, from a study of the drawings, the disclosure, and the appended claims. In the claims, the word "comprising" does not exclude other elements or steps, and the indefinite article "a" or "an" does not exclude a plurality. A single unit or component may fulfil the functions of several items recited in the claims. The mere fact that certain measures are recited in mutually different dependent claims does not indicate that a combination of these measured cannot be used to advantage. Any reference signs in the claims should not be construed as limiting the scope thereof.

The foregoing description provides embodiments of the present disclosure by way of example only. The scope of the present disclosure is defined by the appended claims. One or more of the objects of the present disclosure are achieved by the appended claims.

## Claims

1. A method (101) of manufacturing a mould, the method comprising the steps of:
- providing (103) a mould for manufacturing an object, preferably a mould for injection moulding an object comprising a plastic material;
- determining (105) physical and chemical properties of a material, preferably a plastic material, to be employed with the mould;
- determining (107) a geometry of a first mould section and a second mould section, if present, of the mould, the first mould section and the second mould section, if present, being arranged for, during use, delimiting a part of a cavity for manufacturing of the object;
- determining (109) properties of a surface structure of the mould taking into account the physical and chemical properties of the material, the geometry of the first mould section and the second mould section, if present, the surface structure being provided at a side of the first mould section facing, during use, the cavity and at a side of the second mould section, if present, facing, during use, the cavity;
- treating (111) a surface of the mould to obtain the mould comprising the surface structure having a first section provided with first features and a second section provided with second features, wherein the first features are sharper than the second features, and wherein the first section is provided at a side of the second section facing away, during use, from the cavity.

2. The method according to claim 1, wherein, during the step of determining (109) physical and chemical properties, at least one of surface energy, melting point, viscosity, molecular chain length, chemical composition of the material to be deployed with the mould is determined and/or wherein the step of treating is done by means of laser-texturing, blasting with abrasive and/or non-abrasive particles, electrical discharge machining , milling, grinding, etching, and/or polishing.

3. The method according to claim 1 or 2, further comprising the steps of:
- selecting (113) a suitable solvent, such as ethanol, and/or temperature to dissolve a coating material, preferably comprising the same material as the material of the object to be manufactured with the mould such as the plastic material;
- dissolving (115) the coating material in the solvent, to obtain a solution of coating material;
- depositing (117) the solution of coating material onto the surface structure of the mould;
- evaporating (119) the solvent by heating the solution of coating material deposited onto the surface structure of the mould at a temperature above the melting point of the coating material, optionally subsequently followed by melting of the coating material, such that the surface structure is provided with a coating, preferably, wherein a predetermined amount of the surface area of the surface structure is provided with the coating.

4. The method according to claim 3, wherein, during the step of dissolving (115), the temperature of the solvent is in the range of 50 °C - 90 °C, preferably in the range of 60 °C - 80 °C and/or wherein the solution of coating material obtained in the step of dissolving has a concentration of coating material in the solvent in the range of 1 % - 10 %, preferably in the range 3 % - 5 % and/or wherein the step of depositing is done by means of spraying, brushing, wiping or dipping.

5. The method according to any of the claims 1 to 4, wherein the coating covers at least 19 % of the side of the first mould section facing, during use, the cavity and at least 19 % of the side of the second mould section, if present, facing, during use, the cavity and/or wherein the coating has a thickness in the range of 0.01 - 1.5 micrometre, preferably 0.01 - 1.0 micrometre.

6. The method according to any of the claims 1 to 5, wherein a molecule of the coating material comprises at most two oxygen atoms.

7. A mould (1) arranged for manufacturing an object (3), preferably a mould for injection moulding an object comprising a plastic material, the mould comprising:
- a first mould section (5) arranged for, during use, delimiting a part of a cavity (7) for manufacturing the object;
- a surface structure (9) provided at a side (11) of the first mould section facing, during use, the cavity, wherein the surface structure comprises:
- a first section (13) provided with first features (15);
- a second section (17) provided with second features (19), wherein the first features are sharper than the second features; and
wherein the first section is provided at a side of the second section facing away, during use, from the cavity,
wherein the surface structure is provided with a coating (29), preferably, wherein a predetermined amount of the surface area of the surface structure is provided with the coating.

8. The mould according to claim 7, wherein a majority of the surface area of the surface structure formed by the first section is provided with the first features and/or majority of the surface area of the surface structure formed by the second section is provided with the second features.

9. The mould according to claim 7 or 8, wherein the surface area of the surface structure formed by the first section is free from the second features and/or wherein the surface area of the surface structure formed by the second section is free from the first features.

10. The mould according to any one of the claims 7 to 9, wherein a combined dimension of the first features and the second features is associated with a dimension of the surface features of the object.

11. The mould according to any one of the claims 7 to 10, wherein the coating comprises a material that is identical to the material to be employed with the mould for manufacturing the object, preferably, wherein the coating material is is identical to the material to be employed with the mould for manufacturing the object.

12. The mould according to any one of the claims 7 to 11, wherein the coating covers at least 19 % of the side of the first mould section facing, during use, the cavity and at least 19 % of the side of the second mould section, if present, facing, during use, the cavity.

13. The mould according to any one of the claims 7 to 12, wherein the coating has a thickness in the range of 0.01 - 1.5 micrometre, preferably between 0.01 - 1.0 micrometre.

14. The mould according to any one of the claims 7 to 13, wherein a molecule of the coating material comprises at most two oxygen atoms.

15. The mould according to any one of the claims 7 to 14, wherein the mould is obtained by the method according to any one of the claims 1 to 6.
